# EUROPEAN PATENT APPLICATION

(11) **EP 2 950 262 A1**
(43) Date of publication of application: **02.12.2015**
(21) Application number: 13873080.9
(22) Date of filing: 02.04.2013
(51) Int. Cl.: G06Q 40/06

(54) **FUNDING MANAGEMENT AND POST MANAGEMENT SYSTEM USING OPEN PLATFORM AND METHOD THEREFOR**

(30) Priority: 28.01.2013 KR 20130009533; 08.03.2013 KR 20130025196
(71) Applicant: Opentrade Co., Ltd., Seoul 135-915 (KR)
(72) Inventor: KO, Yong Gi, Seongnam-si Gyeonggi-do 463-935 (KR)
(74) Representative: Bonvicini, Davide
(86) International application number: PCT/KR2013/002712
(87) International publication number: WO 2014/115927

(57) **Abstract**

The present invention relates to a funding management and post management system using an open platform, and a method therefor, in which: a company which wishes to raise funds announces, on the homepage, company information, achievement status of milestones, and the like from the beginning of the business start-up of the company, and investors access the sub-homepage or main homepage of the company, thereby continuously monitoring a timeline and the like, which chronologically show the achievement status of milestones and activity history of the company occurring during operation of the company, and selecting a company of interest in which the investor seeks to invest; and when a company raises funds, investment information of leading investors participating in the beginning of the funding is open to other investors to induce competitive investment participation, thereby successfully raising crowdfunding by multiple investors, and the public are consistently notified of the activity history of the company and company information through the timeline after investment, thereby resulting in the effects of public notice of unlisted companies.

## Description

### [Technical Field]

The present invention relates to a funding management and post-management system and method and, more particularly, to a funding management and post-management system using an open platform, which is configured to include an open platform server system for managing a homepage for providing company information to investor terminals and company terminals connected over a communication network, displaying the achievement status of the milestone of each company, making public the funding situation of a company that has applied funding, extracting potential investors who have registered a company that started funding as an interest company, individually providing notification through SNS, etc., and performing crowdfunding, so that a company that wishes to raise funds announces company information, the current achievement status of a milestone, and the like from the beginning of the business start-up of the company through the homepage regardless of funding, investors access a sub-homepage or main homepage of the company and select a company of interest in which the investors seek to invest while continuously monitoring a timeline which chronologically shows the current achievement status of the milestone and the activity history of the company occurring during the management of the company, if a company is to raises funds, information about the investment of leading investors participating in the beginning of the funding is open to other investors to induce competitive investment participation so that crowdfunding by multiple investors is successfully performed, and after the investment, the activity history of the company and company information are consistently made public through the timeline so that the effects of public notice of unlisted companies are implemented, and a method using the same.

### [Background Art]

In general, a stock firm may participate in the bid/off contracts of listed companies, but may not participate in the bid/off contracts of unlisted companies. Accordingly, the trade of the stocks of unlisted companies is performed through payment of price and stock transfer between a buyer and a seller after subscription and acceptance between the buyer and the seller.

In this case, in order to buy the stocks of an unlisted company from a rightful person or obtain the stocks through public offering, investors have to determine the business contents, development possibility, etc. of the unlisted company. However, there was a problem in that it is difficult for investors to obtain accurate information about the internal situation and market share or sales of a company because in the case of a start-up company, unlike a listed company, a restriction to external audit is not great and disclosed information and the arrangement of the disclosed information are not easy.

Accordingly, investors who wished to obtain the stocks of an unlisted company, in particular, a start-up company had to obtain company information based on a business plan provided by the start-up company and also inevitably relied on advertisement information intermittently displayed on the bulletin board of a stock firm website.

However, there was a problem in that it is difficult for an investor to determine that a business plan will be realized in an actual market with a market ripple effect of what degree because an actual market situation is not incorporated in the business plan, but uncertain and scheduled matters for a rose-colored future are chiefly described in the business plan.

Furthermore, there were problems in that it is difficult to secure reliability of the contents of advertisement information intermittently displayed on the bulletin board of a stock firm website because it is difficult to check the source of the advertisement information and that it is also difficult to integrate, check, and manage information about the management situation of a company that is intermittently described for each company.

That is, there was a problem in that it is difficult for an investor to check the history of a specific company, posted in a bulletin board according to a chronological sequence, in an easily accessible manner and to use it as investment information because the business results, etc. of several unlisted companies are sequentially performed for a long period.

Furthermore, there was a problem in that from a viewpoint of an unlisted company, information about the development situation of the company is provided only as one material of an event, such as seed money funding, because the company does not have means for transferring a dynamic growth process according to the development of the company while securing reliability of investors, and thus company information is difficult to be consistently shared between a start-up company and investors.

Furthermore, recently, crowdfunding that is an investment method for raising funds from a plurality of investors using a medium, such as social media or the Internet, is emerging as means for a creative project or social benefit project, such as a movie, and the financing of a company.

However, there was a problem in that crowdfunding is difficult to be activated because there is no transparent and accurate means capable of notifying a plurality of investors of investment information although a plurality of investors needs to clearly check the success possibility of a project or the development possibility of a company using raised funds.

Furthermore, in a prior art, as disclosed in Korean Patent Application Publication No. 2000-0050128, there were proposed "System For Deciding Investment In Stocks Using Internet and Method for Deciding Investment Using The Same", which enable a common investor to have an improved ability to select and analyze stock information through the sharing of real-time information between the common investor and an expert group consisting of stock professionals related to stock exchange and real-time investment counsel between the two parties.

However, such a conventional system for deciding investment in stocks using the Internet is suitable for providing investment information about a limited number of listed companies, but was problematic in that it is difficult to be directly applied to the provision of investment information for obtaining the stocks of an unlisted company which requires without the direct intervention of a stock firm.

Accordingly, there is an urgent need for a new type of a platform, which enables investors who want to obtain the stocks of an unlisted company to obtain dynamic information about the growth of a company in an actual market in addition to static and scheduled matters disclosed in a business plan. Furthermore, there is a need for new means which enables even start-up companies to stably raise desired funds.

Furthermore, in a prior art, there was no means or institutional strategy which enables investors to monitor or share the business activity situation or growth record of an unlisted company after investment in the unlisted company. Accordingly, there were problems in that an investor must blindly wait with no knowledge of the activity of an invested company and investment in an unlisted company is not activated because proper monitoring or public notice means is not present after investment in an unlisted company as described above.

### [Disclosure]

### [Technical Problem]

An object of the present invention is to provide a funding management and post-management system using an open platform, which is configured to include an open platform server system for managing a homepage for providing company information to investor terminals and company terminals connected over a communication network, displaying the achievement status of the milestone of each company, making public the funding situation of a company that has applied funding, extracting potential investors who have registered a company that started funding as an interest company, individually providing notification through SNS, etc., and performing crowdfunding, so that a company that wishes to raise funds announces company information, the current achievement status of a milestone, etc. from the beginning of the business start-up of the company through the homepage regardless of funding, investors access a sub-homepage or main homepage of the company and select a company of interest in which the investors seek to invest while continuously monitoring the current achievement status of the milestone occurring during the management of the company or the activity history of the company through the timeline, if a company is to raises funds, information about the investment of leading investors participating in the beginning of the funding is open to other investors to induce competitive investment participation so that crowdfunding by multiple investors is successfully performed, and after the investment, investors can easily monitor an added timeline according to the company activity of a corresponding company, that is, a company to be invested, and the update situation of company information, thereby being capable of implementing the public announcement effects of unlisted companies, and a method using the same.

### [Technical Solution]

A funding management and post-management system using an open platform for achieving the object is configured to include an investor terminal which accesses an open platform server system over a communication network, checks the histories and current achievement statuses of the milestones of companies, and inputs investment intentions; a company terminal which accesses the open platform server system over a communication network, registers company information and current achievement status of a milestone, and inputs whether funding is in progress; and the open platform server system which operates a homepage for providing the company information to the investor terminal and the company terminal accessed over a communication network, displays the current achievement status of the milestone of each company, makes public the funding situation of a company which has requested funding, extracts a potential investor who has registered a company which has started funding as an interest company, and performs crowdfunding while individually providing notification.

In this case, the open platform server system is configured to include a business opening unit which stores the company information, such as the business model or financial situation of a company, in a company database by registering the company information and displays the company information on the investor terminal which accesses the open platform server system over a communication network; a milestone management unit which sets several targets achieved while each company carries business in a stepwise milestone and updates and displays a current achievement status of the milestone; a stock issue management unit which registers funding information, such as a funding amount to be funded by a company stored in the company database by issuing stocks, and announces the start of the funding; a potential investor-individual notification unit which extracts an investor who has registered the company that has started the funding as an interest company from an investor database in which human information about investors has been stored as a potential investor and individually notifies each investor of the progress situation of the funding using a notification method set by each investor; and a funding management unit which receives the investment intentions of investors who have accessed the open platform server system over a communication network during the period in which the funding is performed and have inputted the investment intentions of participating in investment, makes public the investors who have participated in the investment, and performs the funding.

In this case, the company information registered by the business opening unit preferably includes several items, such as a business model, the organization of a team, finance information, uniqueness/creativeness, or intellectual property rights.

Furthermore, the potential investor-individual notification unit is configured to include a potential investor extraction unit which extracts a potential investor who has registered a company whose funding is in progress as an interest company through the stock issue management unit by searching the investor database for the potential investor and a notification means activation unit which recognizes notification means set by the potential investor as individual notification means, generates an individual notification message configured to be displayed in the notification means, and individually announces the individual notification message to the potential investor.

Furthermore, the funding management unit is configured to include an investment intention reception unit which accesses the sub-homepage of a company whose funding is in progress using the investor terminal, receives an investor's investment intention displayed when the investor inputs an investment amount, and accumulates and stores the investment intention in the funding database; an investment intention publication unit which displays the investor's investment intention, received from the investment intention reception unit, on the investor terminal by disclosing the investor's investment intention to other investors who have accessed the sub-homepage of the company; and an investment termination unit which terminates the funding by deactivating the investment button if an investment amount accumulated in the investment intention reception unit exceeds a target funding amount or after a new stock subscription period elapses.

Furthermore, the investment intention publication unit displays a list of investors who have expressed their investment intentions through the investment intention reception unit on their investor terminals so that investors who subsequently access the sub-homepage of the company are able to view the list of investors.

Furthermore, the open platform server system is configured to include a timeline management unit which receives the activity history of a company to be invested from the company terminal of the company according to a chronological sequence, stores the received activity history in the company database, and displays the stored activity history through a sub-homepage so that investors who have participated in investment through the funding management unit are able to monitor the activity history of the company after the investment.

Furthermore, the open platform server system is configured to further include a company information update unit which updates and stores a change of company information, registered through the business opening unit and displayed through a sub-homepage assigned to a company, in the company database if there is the change and registers, updates, and displays the change in the sub-homepage.

Furthermore, a funding management and post-management method and post-management method using an open platform for achieving the object includes an investor registration step of storing human information of investors who access an open platform server system over a communication network using investor terminals in an investor database; a company information publication step of storing, by companies which want to receive investment, their company information and current achievement statuses of milestones in a company database and displaying the company information and the current achievement statuses of the milestones on an investor terminal which accesses the open platform server system; a stock issue intention publication step of registering, by a company stored in the company database, funding information including a funding amount to be raised by issuing stocks and a new stock subscription period and notifying investors of a start of funding through a homepage; a potential investor-individual notification of extracting potential investors who have registered the company that started the funding as an interest company from the investor database and individually notifying each potential investor of a funding progress situation of the interest company; a leading investor investment intention reception unit of recognizing the progress of the funding through the homepage or the individual notification, receiving an investment intention inputted by an investor terminal which accesses a sub-homepage of the corresponding company, and accumulating and storing the investment intention in a funding database; an investment intention opening step of displaying investment situations of leading investors accumulated and stored in the funding database on the investor terminals by disclosing the investment situations of the leading investors to other investors who access the sub-homepage of the corresponding company; a following investor investment intention reception step of receiving investment intentions of other investors inputted after the disclosed investment situations of the leading investors are checked and accumulating and storing the received investment intentions in the funding database; and a funding termination step of terminating the funding if the target funding amount is exceeded or the new stock subscription period elapses.

In this case, the investor registration step includes accessing the open platform server system over a communication network, checking company information and the current achievement status of a milestone, and storing and registering individual notification means for individually receiving human information of investors, an interest company selected by the investors, and the funding progress situation and past investment history of the interest company in the investor database.

Furthermore, the potential investor-individual notification step includes a potential investor extraction process of extracting potential investors who have registered companies for which the start of funding has been determined as interest companies in the stock issue intention publication step from the investor database and a potential investor notification process of individually notifying the extracted potential investors of funding progress situations of the interest companies through means, such as news feed, a message, or SNS.

Furthermore, the funding management and post-management method further includes an investment post-management step of displaying the activity history of the company to be invested to the investors who have participated in the investment through the funding through the sub-homepage in the form of a timeline, updating and storing the company information, and displaying the updated and stored company information so that the investors are able to monitor the company to be invested.

In this case, the timeline update process includes storing the activity history of the company for which the funding has been completed generated while the company manages business in the company database and updating and displaying the stored activity history in the sub-homepage of the company according to a chronological sequence in the form of the timeline.

Furthermore, the investment post-management step includes a company information update process of modifying the company information disclosed by the company to be invested in the company information publication step if there is a change in the company information, updating and storing the modified company information in the company database, and updating and displaying the updated and stored new company information in a sub-homepage of the corresponding company.

### [Advantageous Effects]

The present invention has an advantage in that crowdfunding by a plurality of investors is successfully performed in such a manner that a company that wishes to raise funds announces company information, the current achievement status of a milestone, etc. from the beginning of the business start-up of the company through the homepage regardless of funding, investors access a sub-homepage or main homepage of the company and select a company of interest in which the investors seek to invest while continuously monitoring the current achievement status of a milestone occurring during the management of the company or a timeline, and if a company is to raises funds, information about the investment of leading investors participating in the beginning of funding is open to other investors to induce competitive investment participation.

Furthermore, the present invention has an advantage in that it can attract additional investment or improve reliability of a company to be invested because after investment, newly updated timeline and company information can be continuously monitored through a sub-homepage, thereby being capable of implementing the public announcement effects of unlisted companies.

### [Description of Drawings]

FIG. 1 is a block diagram of a funding management and post-management system using an open platform according to the present invention.
FIG. 2 is a screen showing milestone items displayed after an open platform server system according to the present invention is accessed.
FIG. 3 is a screen showing companies which have achieved milestones, which are displayed after the open platform server system according to the present invention is accessed.
FIG. 4 is a screen showing the timelines of companies retrieved after the open platform server system according to the present invention is accessed.
FIG. 5 is diagram showing the configuration of the funding management and post-management method using an open platform according to the present invention.

### <Description of Reference Numerals>

100: investor terminal
200: company terminal
300: open platform server system
310: business opening unit.
320: milestone management unit
321: milestone setting unit
322: milestone display unit
330: stock issue management unit
340: potential investor-individual notification unit
341: potential investor extraction unit
342: notification means activation unit
350: funding management unit
351: investment intention reception unit
352: investment intention publication unit
353: investment termination unit
361: investor database
362: company database
363: funding database
370: timeline management unit
380: company information update unit

### [Mode for Invention]

Hereinafter, detailed embodiments of the present invention are described in detail with reference to the accompanying drawings.

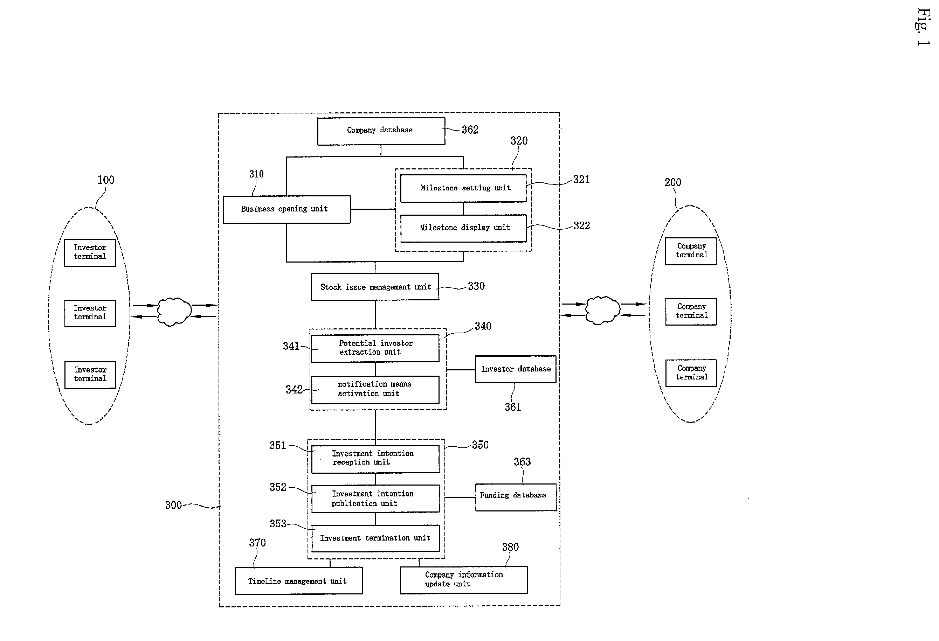

FIG. 1 is a block diagram of a funding management and post-management system using an open platform according to the present invention.

Referring to FIG. 1, the funding management and post-management system using an open platform according to the present invention is configured to include an investor terminal 100 which accesses an open platform server system over a communication network, checks the histories and current achievement statuses of the milestones of companies, and inputs investment intentions, a company terminal 200 which accesses the open platform server system over a communication network, registers company information and the current achievement status of a milestone, and inputs whether funding is in progress, and the open platform server system 300 which operates a homepage for providing company information to the investor terminal and the company terminal accessed over a communication network, displays the current achievement status of the milestone of each company, makes public the funding situation of a company which has requested funding, extracts a potential investor who has registered a company which has started funding as an interest company, performs crowdfunding while individually providing notification through SNS, and consistently makes public the activity history of a company to be invested through a timeline in a sub-homepage of the company so that post-monitoring is possible after investment.

The investor terminal 100 includes a personal computer or smart terminal which accesses the open platform server system 300 over a communication network, has it authenticated, checks company information made public by companies and the histories of milestones achieved by the companies, selects a company, and inputs investment intention. In this case, the smart terminal is configured to include a smart phone or table PC on which an independent operating system has been mounted and which is capable of accessing the open platform server system over a wireless communication network, checking contents displayed on a webpage, and inputting contents. In this case, if the investor terminal 100 is formed of a smart terminal, such as a smart phone, the investor terminal 100 may be configured to receive a change of the milestone of an interest company or the situations of leading investors who participate in funding in real time through an application installed in the smart terminal.

Furthermore, the investor may include an investment company, such as a corporate body investor, in addition to a personal investor, such as an angle investor.

The company terminal 200 includes a personal computer or smart terminal which accesses the open platform server system 200 over a communication network, has it authenticated, registers company information regarding the assets or resources of companies, such as its own business direction and asset situation or the present condition of possession of intellectual property rights, sets a milestone achieved while managing the company, rapidly registers the current achievement status of the milestone, and registers the progress situation of funding.

In this case, even after investment in addition to prior to the investment, the company terminal 200 accesses the open platform server system 300, updates and registers company information, such as the asset situation of a corresponding company, updates the current achievement status of a milestone, and registers the activity history of the company in the form of a timeline. Accordingly, investors who have made an investment in addition to investors prior to investment can frequently monitor the activity history of a corresponding company.

The open platform server system 300 is configured to include a business opening unit 310 which stores company information, such as a business model or financial situation of a company, in a company database by registering the company information and displays the company information on an investor terminal which accesses the open platform server system 300 over a communication network, a milestone management unit 320 which sets several targets achieved while each company carries business in a stepwise milestone and updates and displays the current achievement status of the milestone, a stock issue management unit 330 which registers funding information, such as a funding amount to be funded by a company stored in the company database by issuing stocks, and announces the start of the funding, a potential investor-individual notification unit 340 which extracts an investor who has registered the company that has started the funding as an interest company from an investor database in which human information about investors has been stored as a potential investor and individually notifies each investor of the progress situation of the funding using a notification method set by each investor, a funding management unit 350 which receives investment intentions of investors who have accessed the open platform server system 300 over a communication network during the period in which funding is performed and have inputted the investment intentions of participating in investment, makes public the investors who have participated in the investment, and performs the funding, and a timeline management unit 370 which receives the activity history of a company to be invested from the company terminal of the company according to a chronological sequence, stores the received activity history in a company database, and displays the stored activity history through a sub-homepage so that investors who have participated in investment through the funding management unit may monitor the activity history of the company after the investment.

In this case, the open platform server system 300 is configured to include a web server which operates and manages a homepage capable of being accessed over a communication network through the company terminal or the investor terminal in order to provide transparent and basic information for determining whether investors will make an investment by opening company information or funding information, registered by a company terminal over a communication network, to the investors and also to easily achieve a funding amount through an additional investment by opening the investment situation of investors who have made an investment in a company whose funding is in progress to other investors including potential investors.

Furthermore, the open platform server system 300 including the web server is preferably configured to assign a sub-homepage to each company that registers company information after member subscription and to accumulate and store the history of the company in the sub-homepage in the form of a timeline so that investors who try to search for detailed information and history about a corresponding company can easily check the history by only reviewing the contents of the timeline in the sub-homepage.

Furthermore, the open platform server system 300 including the web server is preferably configured to assign a sub-homepage to each of investors who have become memberships and to accumulate and store the past investment histories of investors or information about companies registered as interest companies in sub-homepages in the form of timelines so that investors can easily check their own investment histories.

As described above, the main homepage managed by the open platform server system 300 or the sub-homepage assigned to each company or investor may be configured to be displayed while naturally announcing the activities of a company or the activity history of an investor through a timeline and a news feed function.

In this case, since the current achievement status of the milestone of a company or an activity history to be notified by a company is continuously recorded through a timeline, the activity history of a corresponding company can be checked in the form of SNS according to a chronological sequence. Furthermore, only writing newly registered in the sub-homepage of a predetermined interest company or an interest investor can be seen through the news feed.

Furthermore, the open platform server system 300 is preferably configured to enable contents, registered with the sub-homepages of other companies or investors, to be selected, scrapped, fetched, and registered with its own sub-homepage so that corresponding contents can be checked in its own sub-homepage anytime.

That is, the open platform server system 300 may be configured to enable contents, posted by other companies or other investors on timelines, to be scrapped, fetched, and registered with its own sub-homepage so that corresponding contents can be checked in its own sub-homepage anytime or can be moved to the sub-homepage of a poster of corresponding contents anytime.

The business opening unit 310 is configured to enable a company to which a sub-homepage has been assigned by the open platform server system 300 to store company information, such as its business model, its finance situation, or the present condition of possession of intellectual property rights in the company database 360 by registering the company information for each category item and to display the company information on the investor terminal 100 which accesses the sub-homepage of each company.

In this case, a company which registers company information through the business opening unit 310 may be a company that has long managed business for a specific period, but may preferably be a preliminary start-up person or start-up company who has an insufficient opportunity to widely promote him or her or the company or has a difficulty in attracting an investment. That is, start-up companies which are difficult to attract investment can stably raise funds through crowdfunding, and investors also initially make an investment based on the technical skills and development possibility of a company, thereby being capable of making a great profit instead of a danger of investment. Accordingly, a company in the early start-up stage, such as a start-up company, may greatly require the funding management and the post-management system according to the present invention.

In this case, the company information inputted to the company terminal 200 and registered with the business opening unit 310 is configured to include several items, such as a business model, the organization of a team, finance information, uniqueness/creativeness, or intellectual property rights. Each of the items of the company information is used for investors to check the company more accurately. It is to be noted that the company information is not limited to the aforementioned items, but may be configured in various ways.

The business model describes how a company, that is, a single organization, will create, propagate, and capture values, rationally and systematically, and is basic data on which investors can most check the characteristics of a service to be substantially implemented by the company. Accordingly, the business model is preferably configured to register a basic model to be realized by a company while carrying business therein in a plurality of steps in detail.

Accordingly, the business model may be configured to write and register 9 blocks, including value propositions, key activities, key resources, customer segments, channels, customer relationships, revenue streams, cost structures, and key partners, therein in detail by applying a business model canvas model.

Furthermore, the organization of a team may preferably be registered by a company so that the histories and professional fields of key figures that may become keys when the company carries business are written and thus investors may refer to the histories and professional fields of the key figures when reviewing the development direction and development possibility of a start-up company based on the past histories of major members who participate in major tasks while they are responsible for the major tasks.

Furthermore, the finance information describes the asset volume of a company in detail so that investors may check the financial solvency of the company. The uniqueness/creativeness may preferably be used to upload the creative characteristics of only a company different from those of peers providing similar services or products along with free data, such as MS Word, PowerPoint, and PDF so that investors frequently check the creative characteristics.

Furthermore, the intellectual property rights is preferably configured to register the present condition of possession of intellectual property rights, such as the pending applications or registered patens of a company, or a progress situation or the current status of technical data issued through news so that investors can easily check the present condition of possession of intellectual property rights of the company and corresponding intellectual property rights can be subsequently traded between members, such as companies or investors.

In this case, the open platform server system 300 is preferably configured to further include a company information update unit 380 capable of storing a change of company information, registered through the business opening unit 310 and displayed through a sub-homepage assigned to a company, in the company database 362 if there is the change in the assets or team members of the company, and also registering and updating the change in the sub-homepage.

As described above, company information changed according to the development of a company whose funding has already been completed through the company information update unit 380 is updated and stored in a company database 361, and investors are consistently notified of the company information through a sub-homepage, etc. Accordingly, an announcement effect can be implemented even in the case of an unlisted company, additional funding can be prepared, and investors can obtain reliability of a corresponding company.

The milestone management unit 320 is configured to set several targets, achieved by a company while the company grows from the beginning, step by step, notify investors of the achievement of a milestone whenever the company achieves a set target, and display the degree of achievement of the milestone in the sub-homepage of the company visually and easily.

To this end, the milestone management unit 320 is configured to include a milestone setting unit 321 which sets and stores several targets expected to be achieved by a company step by step and a milestone display unit 322 which represents and displays a point currently reached by the company in a milestone item in which a plurality of steps is displayed visually.

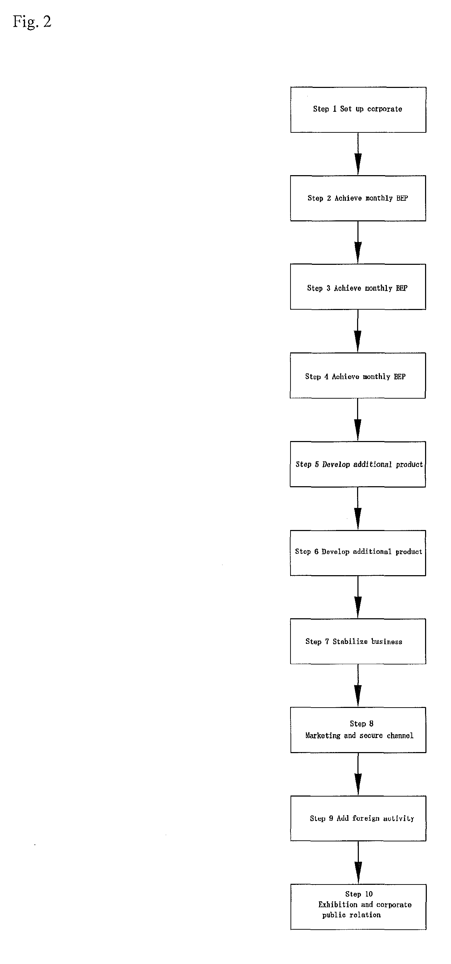

The milestone setting unit 321 is configured to set a milestone, that is, a target to be achieved by a company, and store the milestone in the company database 362 of the open platform server system. As shown in FIG. 2, the milestone setting unit 321 is configured to set and store various situations sequentially achieved by a company while carrying business after the company was set up, such as corporate establishment Step 1, monthly BEP achievements Step 2 to Step 4, additional product development Step 5 and Step 6, business stabilization Step 7, marketing and channel security Step 8, foreign activity addition Step 9, and exhibition and company publicity Step 10, as stepwise targets.

In this case, the steps showing the milestone of FIG. 2 are only an example of several targets which may be set by a company, and other targets may be set and stored in detail in various ways.

Furthermore, the milestone display unit 322 is preferably configured to display several targets set by the milestone setting unit through a sub-homepage managed by the open platform server system 300 so that investors or existing investors can easily predict the growth direction of a company and to make different an already achieved target or add a separate indication to the already achieved target so that it can be easily recognized.

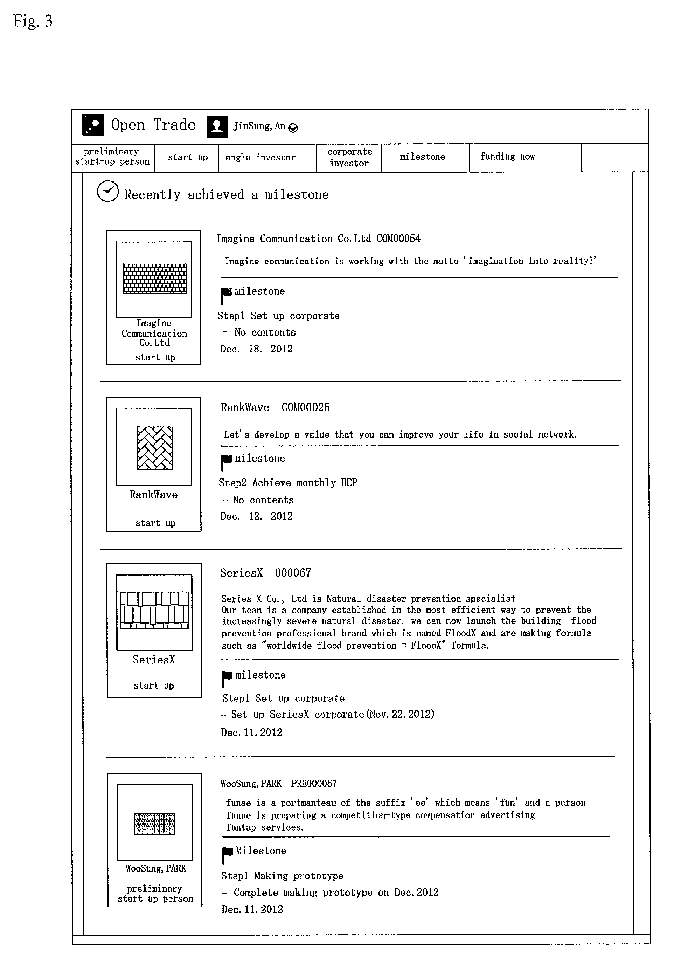

In this case, the milestone display unit 322 is configured to display only the current achievement status of the sequential milestone of a specific company and is preferably configured to simply display the names of some companies that belong to several companies stored in the company database 362 and that have achieved theirs milestones and the histories of the achieved milestones through homepages, as shown in FIG. 3.

As described above, since companies which have achieved their milestones are arranged and displayed through the milestone display unit 322, inconvenience in which investors have to check the current achievement statuses of the milestones of all unlisted companies one by one can be reduced, and a company which rapidly achieves its milestone can be consistently exposed to investors, thereby being capable of inducing the investors as potential investors.

Furthermore, since the current achievement status of a milestone can be immediately checked through the sub-homepage of each company, dynamic company information, such as the management results of a company individually interested by investors, can be monitored easily and consistently.

The stock issue management unit 330 is configured to store a funding amount and a new stock subscription period set using the company terminal 200 in a funding database 363 and register the set funding amount and new stock subscription period with the homepage so that investors are aware that funding for a corresponding company is in progress.

In this case, the stock issue management unit 330 is preferably configured to display a list of companies whose funding is in progress in the independent block of the main window of the homepage and to activate an investment button (a cooperation/investment request button) through which visited investors can directly participate in the funding while displaying information about the funding of a corresponding company in the sub-homepage of the company.

Furthermore, the stock issue management unit 330 is preferably configured to display a funding amount and a new stock subscription period in the sub-homepage of each company and also display the current collection status of the funding amount and the remaining period of the new stock subscription period.

As described above, companies whose funding is in progress are consistently exposed to investors who visit the homepage through the stock issue management unit 330, and milestones achieved by the companies and company information are also provided. Accordingly, crowdfunding can be implemented because a company for itself can collect many and unspecified investors.

The potential investor-individual notification unit 340 is configured to include a potential investor extraction unit 341 which extracts a potential investor who has registered a company whose funding is in progress as an interest company through the stock issue management unit 330 by searching the investor database 361 for the potential investor and a notification means activation unit 342 which recognizes notification means set by each potential investor as individual notification means, generates an individual notification message configured to be displayed in the notification means, and individually announces the individual notification message to each potential investor.

The potential investor extraction unit 341 selects an interest company while monitoring company information or the current achievement status of a milestone and extracts an investor stored in the investor database 361. To this end, the potential investor extraction unit 341 is preferably configured to match the unique number of a corresponding company with the human information of an investor and store them in the investor database 361 when the corresponding company is stored as an interest company so that a potential investor can subsequently extract the corresponding company easily.

The notification means activation unit 342 extracts notification means, set by a potential investor in order for the potential investor to individually receive notification (or push), from the investor database 361, generates an individual notification message of a form suitable for corresponding notification means, and sends the individual notification message so that a potential investor is rapidly notified of a corresponding notification message.

In this case, the notification means activation unit 342 is configured to generate an SMS message or a note which provides notification of the start of funding in an interest company through communication means included in the open platform server system and send the SMS message or note if a potential investor has selected a text message or note in a mobile phone as the notification means.

Furthermore, if a potential investor has selected SNS, such as Facebook or Twitter, as the notification means, the notification means activation unit 342 generates a message generated suitably for each SNS and registers the generated message with an SNS account so that an investor can recognize that funding is in progress even without accessing the sub-homepage of a corresponding company.

The funding management unit 350 is configured to include an investment intention reception unit 351 which accesses the sub-homepage of a company whose funding is in progress using the investor terminal, receives an investor's investment intention displayed when the investor inputs an investment amount, and accumulates and stores the investment intention in the funding database, an investment intention publication unit 352 which displays the investor's investment intention, received from the investment intention reception unit, on the investor terminal by disclosing the investor's investment intention to other investors who have accessed the sub-homepage of the company, and an investment termination unit 353 which terminates the funding by deactivating the investment button (the cooperation/investment request button) if an investment amount accumulated in the investment intention reception unit exceeds a target funding amount or after a new stock subscription period elapses.

The investment intention reception unit 351 checks funding information displayed through the stock issue management unit 330 and accesses the sub-homepage of a company or is individually notified that funding is in progress in a company registered as an interest company through the potential investor-individual notification unit 340. Thereafter, the investment intention reception unit 351 receives an investment amount received through the investor terminal 100 which has accessed the sub-homepage of the corresponding company, accumulates and stores the received investment amount in the funding database 363, and receives an investor's investment intention.

In this case, the investment intention reception unit 351 is configured to receive an investment amount inputted by an investor and store the received investment amount if it has been configured so that an investor can input an amount and is configured to receive only a corresponding set amount if it has been configured so that an investor does not select an investment amount and can invest only a specific amount.

In this case, the investment intention reception unit 351 is configured to accumulate and store only an investment amount inputted by the investor terminal regardless of a funding amount that has been stored in the funding database 363 and that is to be raised and to compare the investment amount with the funding amount and may also be configured to display the remaining amount that may be invested by subtracting the investment amount from the funding amount.

The investment intention publication unit 352 is configured to display a list of investors who have expressed their investment intentions through the investment intention reception unit on their investor terminals 100 so that investors who subsequently access the sub-homepage of a company can view the list of investors.

As described above, a list of investors who have determined to make an investment and their amounts during the funding process of a specific company are displayed and made public through the investment intention publication unit 352 so that other investors can view the list of investors and the amounts, thereby being capable of inducing competitive investment participation.

Furthermore, since a funding amount accumulated during funding is also made public to other investors, even other investors who have not registered a corresponding company as an interest company competitively participate in investment, thereby being capable of successfully inducing crowdfunding.

In this case, investors can check company information and the current achievement status of the milestone of a corresponding company rapidly and accurately through the sub-homepage of the corresponding company. Accordingly, investors do not make an unconditional investment, but can evaluate a company through an accurate and cool-headed analysis of the company even after he or she has an interest in the investment of the corresponding company and determine whether or not to make an investment, thereby enabling a stable investment.

As described above, after leading investors are collected and funding is activated through the stock issue management unit 330 and the potential investor-individual notification unit 340, continuous exposure is performed through the homepage and the acceptance and subscription of stocks, that is, investment intentions of investors who have already determined to make an investment, are open to other investors, thereby being capable of additionally collecting following investors.

As described above, since leading investors and following investors gather to maximize the spread effect of funding, successful crowdfunding not conventional secret funding based on some acquaintances or a large investment company can be performed.

The investment termination unit 363 is configured to terminate investment by deactivating the investment button displayed in the sub-homepage of a corresponding company if a new stock subscription period set in the stock issue management unit elapsed so that a transparent investment is made only in the same new stock subscription period.

Furthermore, the investment termination unit 363 may be configured to terminate investment by deactivating the investment button displayed in the sub-homepage. of a corresponding company if a target funding amount is achieved even before a new stock subscription period elapsed. However, an investment intention is expressed, but may be subsequently forgiven due to a change of mind. Investment of investors preferably is possible during a new stock subscription period.

As described above, after a plurality of investors makes an investment through the funding management unit during a new stock subscription period, the investors who have participated in the investment are asked about their investment intentions, responses thereto are received through the investor terminals, and stocks corresponding investment amounts are divided to the investors.

Furthermore, the timeline management unit 370 is configured to receive various business results, occurring in the activity history of a company even after funding is completed in addition to prior to investment, from the company terminal 200, store the various business results in the company database, and display such an activity history in the sub-homepage of the corresponding company in the form of a timeline according to a chronological sequence.

Accordingly, before funding is performed, investors are notified of the substantial activity history of a company in addition to company information or a milestone, thereby being capable of contributing to the attraction of investment. Furthermore, after the funding is performed, an active activity history of the company performed using an investment amount is frequently announced to investors, thereby being capable of improving reliability of the company.

Furthermore, unlike company information or milestone that is updated or achieved with a significant time different, even a trivial activity history of a company can be announced to investors through a timeline. Accordingly, investors who have already made an investment can perform post-management while frequently monitoring the growth process of an invested company.

Accordingly, a change of the asset/liability of a company, a change of executives and staff members, a change of the location of the company, a change of cooperation/alliance, outcome and results, etc. can be frequently announced to investors who have already made an investment in addition to investors who try to make an investment through the consistent update of a timeline. Accordingly, an institutional base capable of protecting investors from an unlisted company whose public announcement has not been instituted can be formed.

Furthermore, as described above, the transparency of company operation can be secured and reliability can be provided to a plurality of investors through the activity history of the company in a timeline that is consistently updated before and after funding. Furthermore, the growth process of a company is announced, thereby being capable of positively contributing to the attraction of additional investment.

A funding management and post-management method using an open platform according to the present invention is described below.

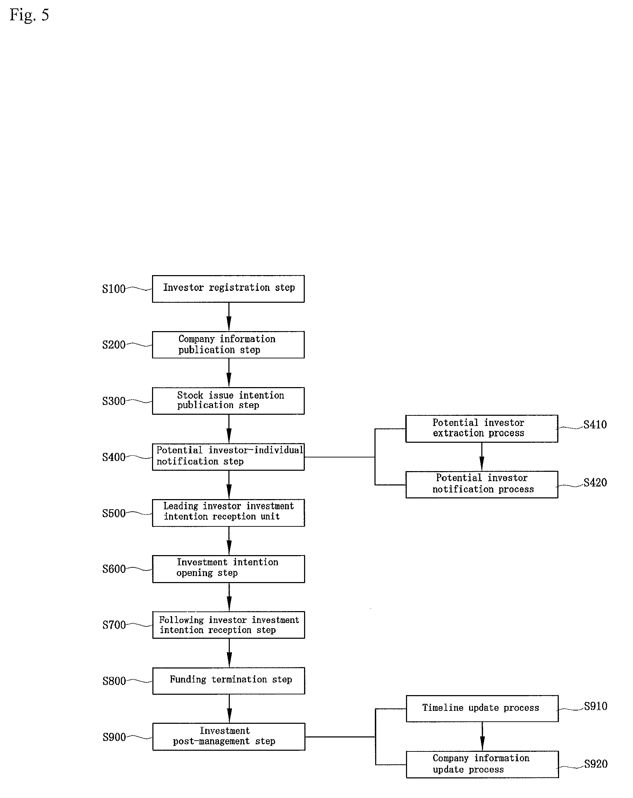

FIG. 5 is diagram showing the configuration of the funding management and post-management method using an open platform according to the present invention.

Referring to FIG. 5, a funding management and post-management method using an open platform according to the present invention is configured to include an investor registration step S100 of storing human information of investors who access the open platform server system over a communication network using the investor terminals in the investor database, a company information publication step S200 of storing, by companies which want to receive investment, their company information and current achievement statuses of milestones in the company database and displaying the company information and the current achievement statuses of the milestones on an investor terminal which accesses the open platform server system, a stock issue intention publication step S300 of registering, by a company stored in the company database, funding information including a funding amount to be raised by issuing stocks and a new stock subscription period and notifying investors of the start of funding through a homepage, a potential investor-individual notification step S400 of extracting potential investors who have registered the company that started the funding as an interest company from the investor database and individually notifying each potential investor of the funding progress situation of the interest company, a leading investor investment intention reception step S500 of recognizing the progress of the funding through the homepage or the individual notification, receiving an investment intention inputted by an investor terminal which accesses a sub-homepage of a corresponding company, and accumulating and storing the investment intention in the funding database, an investment intention opening step S600 of displaying the investment situations of leading investors accumulated and stored in the funding database on the investor terminals by disclosing the investment situations of the leading investors to other investors who access a sub-homepage of a corresponding company, a following investor investment intention reception step S700 of receiving investment intentions of other investors inputted after the disclosed investment situations of the leading investors are checked and accumulating and storing the received investment intentions in the funding database, a funding termination step S800 of terminating the funding if a target funding amount is exceeded or a new stock subscription period elapses, and an investment post-management step S900 of displaying the activity history of a company to be invested to investors who have participated in investment through funding through a sub-homepage in the form of a timeline, updating and storing company information, and displaying the company information so that investors can monitor the company to be invested.

The investor registration step S100 includes accessing the open platform server system 300 over a communication network, checking company information and the current achievement status of a milestone, and storing and registering individual notification means for individually receiving human information of a personal investor, such as an angle investor who wants to make an investment, and corporate investors, an interest company selected by investors, and the funding progress situation of the interest company and a past investment history in the investor database 361.

In this case, an interest company selected by investors and the past investment histories of investors may be frequently changed and updated and stored in the investor database 361. An interest company is stored in the investor database 361 along with a unique number assigned to the corresponding company so that if funding for the corresponding company is started, a potential investor that is an investor who has registered the corresponding company as an interest company is easily extracted from the investor database 361.

The company information publication step S200 includes registering, by preliminary start-up persons or start-up companies which want to raise required funds through investment from a plurality of investors through the open platform server system 300, their company information, setting milestones of several steps achieved while managing the companies, updating and storing the company information and already achieved milestones, and displaying the updated and stored company information and milestones on the investor terminal 100.

In this case, the company information displayed on the investor terminal 100 which accesses the homepage managed and operated by the open platform server system 300 through the company information publication step S200 preferably includes several items, such as a business model, the organization of a team, finance information, and uniqueness/creativeness, or intellectual property rights, as described above. In addition, various items for notifying an investor of the growth possibility of a company may also be included in the company information.

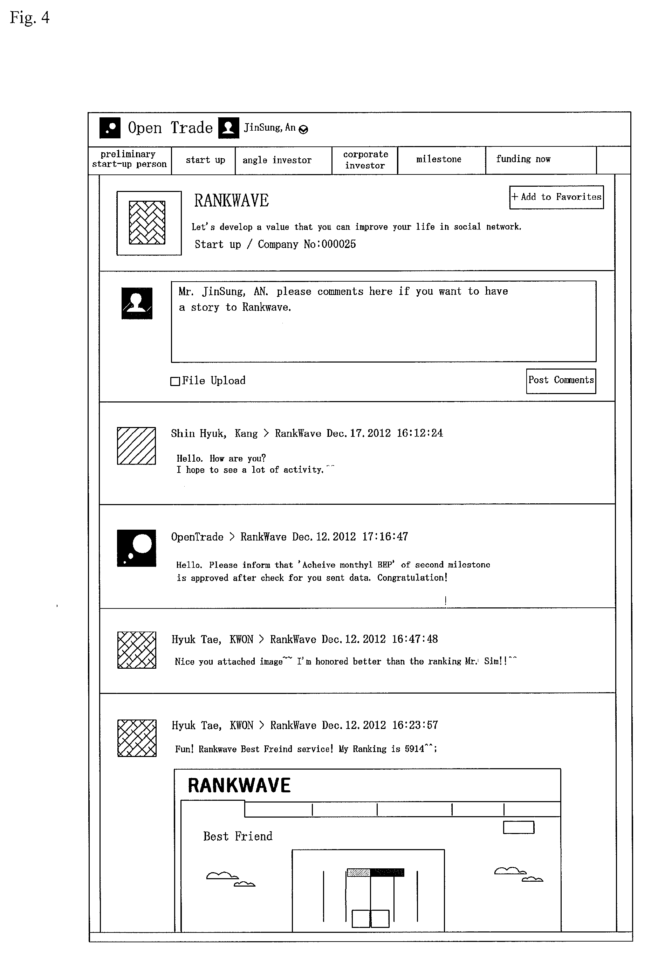

Furthermore, such company information is preferably configured to be displayed on the investor terminal through a sub-homepage allocated to each company. As shown in FIG. 4, dynamic information generated during the management of a company is frequently stored in the sub-homepage in the form of SNS and is displayed in the form of a timeline so that investors who have visited the sub-homepage of the corresponding company can easily check the history of the corresponding company by only reviewing the timeline.

In this case, the sub-homepage of the company is preferably configured in such a manner that investors directly register their questions with the sub-homepage and receive answers for the questions from the company through the sub-homepage so that the company and the investors maintain a closer relationship and the growth possibility of the company can be determined.

Furthermore, the company information publication step S200 is preferably configured to set, by each company, a milestone that is a target to be achieved while managing business, store the milestone in the company database 362, display an achieved milestone through the main homepage managed by the open platform server system 300 and the sub-homepage of a corresponding company if the corresponding company achieves the milestone so that investors' interest in the corresponding company is attracted.

To this end, a list of companies which have achieved their milestones and a brief description of the achieved milestone are displayed on the main homepage so that investors may be induced to the sub-homepage of each company. Furthermore, a more detailed description of a milestone achieved by the sub-homepage of each company is disclosed and a milestone to be achieved is displayed so that investors' investment mentality can be stimulated.

The stock issue intention publication step S300 is configured to register funding information, including a funding amount to be collected by a company which wishes to raise required funds and a new stock subscription period, with the funding database 363 and to notify investors of the progress of funding through the main homepage and the sub-homepage of the company.

To this end, the stock issue intention publication step S300 is configured to display the funding progress situations of a plurality of companies, which are in progress through a funding block that is displayed in the main homepage and that is now in progress, on the investor terminal 100 which has accessed the open platform server system 300 and to activate the investment button through which investors can participate in funding in the investor terminal 100 which has accessed the sub-homepage of a corresponding company.

In this case, the activation of the investment button through which investors can participate in funding is preferably performed in the sub-homepage of each company, but may be configured so that a list of a plurality of companies whose funding is in progress are displayed on a separate webpage and investment is possible in the corresponding webpage.

The potential investor-individual notification step S400 is configured to include a potential investor extraction process S410 of extracting potential investors who have registered companies for which the start of funding has been determined as interest companies in the stock issue intention publication step from the investor database and a potential investor notification process S420 of individually notifying the extracted potential investors of the funding progress situations of the interest companies through means, such as news feed, a message, or SNS.

In this case, the potential investor extraction process S410 is configured to extract potential investors, that is, investors who have registered a corresponding company as an interest company while monitoring the company information or current achievement status of the milestone of the corresponding company before funding is performed and who have been stored in the investor database 361. That is, it is evident that the investment wills of investors who have monitored the development situation of a corresponding company with a continuous interest in the company will be higher than those of other common inventors prior to the progress of the funding. Accordingly, it may be preferred that an investor who has registered the corresponding company as an interest company is extracted as a potential investor for successful funding.

The potential investor notification process S420 is configured to recognize individual notification means previously set by an investor who has been extracted from the investor database 361 as a potential investor, generate an individual notification message that is activated in the individual notification means and that provides notification of the funding progress situation of an interest company in a form in which the funding progress situation may be easily recognized by the investor, and send the individual notification message.

In this case, the individual notification means may include a text message, a note, or SMS which may be immediately checked through a mobile phone. If individual notification is provided to a plurality of assemblies, such as a corporate body investor, individual notification for a funding progress situation may be performed through SNS, such as Facebook or Twitter.

Since individual notification is performed on potential investors who have registered a corresponding company as an interest company as described above, the loss of an opportunity to make an investment in a company which is usually monitored with an interest can be prevented.

The leading investor investment intention reception unit S500 is configured to receive investors' investment intentions by receiving information inputted by investors who have recognized the progress fact of funding from the main homepage or the sub-homepage of each company in the stock issue intention publication step S300 or potential investors who have recognized the progress fact of the funding through individual notification in the potential investor-individual notification step S400 using his or her own investor terminals and accumulating and storing the information in the funding database 363.

In this case, the investment intentions inputted by the investors or the potential investor are preferably configured to be stored in the funding database 363 in such a manner that an investment amount is accumulated and calculated so that other investors or companies may frequently monitor the current achievement status of a target funding amount.

The investment intention opening step S600 is configured to display and disclose the current status of the accumulation of an investment amount accumulated and stored in the funding database 363 or information about investors through the leading investor investment intention reception unit S500 on the investor terminal 100 of other investors who have accessed the sub-homepage of a corresponding company in order to make an investment in the company after the open platform server system 300 is accessed.

Since the investment information of investors who have first expressed their investment intentions in the investment intention opening step S600 are open on the same platform so that other investors may view the investment information of the investors as described above, the competitive and active investment participation of a plurality of investors can be derived compared to conventional closed and narrow funding based on acquaintances.

In this case, if investment amounts applied to be invested by corresponding investors are open in addition to human information, such as the names of the investors, the competitive participation of other investors can be expanded, and thus crowdfunding that reaches the target amount of a company can be successfully derived.

In the following investor investment intention reception step S700, other investors who have checked the investment intentions of leading investors who have participated in funding that is in progress in a corresponding company participate in investment using his or her own investor terminals 100. Accordingly, the investment intentions of other investors may be received and stored in the funding database 363.

In this case, the leading investor refers to an investor who has first applied an investment in a corresponding company, and the following investor refers to an investor who checks the investment intentions of leading investors, determines to make an investment, and makes an investment. Accordingly, the following investor may also become the leading investor of other following investors.

The funding termination step S800 is configured to calculate a total investment amount by accumulating the investment intentions of leading investors and the investment intentions of following investors who have checked the investment intentions of the leading investors and thereafter have actively participated in investment and to terminate the investment by deactivating the investment button after a new stock subscription period registered in the funding database 363 elapses.

Furthermore, investment may be terminated by deactivating the investment button if a target funding amount is exceeded before a new stock subscription period expires.

As described above, regardless of funding, a company which wishes to raise funds announces company information and the current achievement status of a milestone from the beginning of the business start-up of the company through a sub-homepage. Investors accesses the sub-homepage of a corresponding company or the main homepage and select an interest company to be invested while consistently monitoring the current achievement status of the milestone occurring during the management of the company. If funding is performed in the company, information about the investment of leading investors who participate in the funding in the beginning is open to other investors. Accordingly, competitive investment participation can be derived, and crowdfunding by multiple investors can be successfully performed.

Furthermore, the investment post-management step S900 is configured to include a timeline update process S910 of displaying the activity history of a company to be invested in a sub-homepage in the form of a timeline and a company information update process S920 of updating company information about the company to be invested and displaying the updated company information in the sub-homepage.

In this case, the timeline update process S910 is configured to receive the activity history of a company for which funding has been completed generated while the company manages business from the company terminal, store the received activity history in the company database, and update and display the stored activity history in the sub-homepage of the company according to a chronological sequence in the form of a timeline.

Accordingly, since a change of the asset/liability of the company, a change of the executives and staff members of the company, a change in the location of the company, a change of the cooperation/alliance of the company, and the outcome and results of the company are displayed through the timeline, investors can be consistently notified of the activity history of the company like the public announcement of the company even in the case of an unlisted company, and the investors of the unlisted company can consistently monitor and performs post-management on a company in which the investors have made an investment.

In the company information update process S920, if there is a change in company information disclosed in the company information publication step S200, such as a change in the assets or team members of a company or the acquisition of intellectual property rights after funding is completed, the company information is modified and updated and stored in the company database, and the updated and stored new company information is displayed in the sub-homepage of the corresponding company.

Company information changed in the company information update process S920 as described above is frequently updated and announced through the sub-homepage of a corresponding company. Accordingly, in the case of an unlisted company in which the public announcement of the company has not been instituted, an announcement effect, such as that of a listed company, can be implemented.

Since an unlisted company can frequently notify investors of the activity history of the company through such timeline update and company information update, investors who have already made an investment can consistently monitor an invested company, and a company can build up reliability of the company for additional funding by notifying investors of its company activity history through the updated timeline or the updated company information.

Although the technical spirit of the present invention has been described above with reference to the accompanying drawings, it has illustrated a preferred embodiment of the present invention, but is not intended to limit the present invention. It is evident that those skilled in the art to which the present invention pertains may modify and imitate the present invention in various ways without departing the category of the technical spirit of the present invention.

### [Industrial Applicability]

The present invention may be used as a stable investment system for an unlisted company because it enables the public announcement effects of a company to be implemented even in the case of an unlisted company so that crowdfunding is performed and it enables the post-monitoring of an invested company.

## Claims

1. A funding management and post-management system using an open platform, comprising:
an investor terminal which accesses an open platform server system over a communication network, checks histories and current achievement statuses of milestones of companies, and inputs investment intentions;
a company terminal which accesses the open platform server system over a communication network, registers company information and current achievement status of a milestone, and inputs whether funding is in progress; and
the open platform server system which operates a homepage for providing the company information to the investor terminal and the company terminal accessed over a communication network, displays the current achievement status of the milestone of each company, makes public a funding situation of a company which has requested funding, extracts a potential investor who has registered a company which has started funding as an interest company, and performs crowdfunding while individually providing notification.

2. The funding management and post-management system of claim 1, wherein the open platform server system is configured to comprise a web server which operates and manages a homepage which is accessible over a communication network through the company terminal or the investor terminal, assign a sub-homepage to companies and investors who have become members, select contents registered with sub-homepages of other companies or investors, scrap the selected contents, and registers the scrapped contents with a sub-homepage of a corresponding company or investor.

3. The funding management and post-management system of claim 1, wherein the open platform server system is configured to comprise:
a business opening unit which stores the company information, such as a business model or financial situation of a company, in a company database by registering the company information and displays the company information on the investor terminal which accesses the open platform server system over a communication network;
a milestone management unit which sets several targets achieved while each company carries business in a stepwise milestone and updates and displays a current achievement status of the milestone;
a stock issue management unit which registers funding information, such as a funding amount to be funded by a company stored in the company database by issuing stocks, and announces a start of the funding;
a potential investor-individual notification unit which extracts an investor who has registered a company that has started funding as an interest company from an investor database in which human information about investors has been stored as a potential investor and individually notifies each investor of a progress situation of the funding using a notification method set by each investor; and
a funding management unit which receives investment intentions of investors who have accessed the open platform server system over a communication network during a period in which funding is performed and have inputted the investment intentions of participating in investment, makes public the investors who have participated in the investment, and performs the funding.

4. The funding management and post-management system of claim 3, wherein the milestone management unit is configured to comprise:
a milestone setting unit which sets and stores several targets expected to be achieved by a company step by step; and
a milestone display unit which represents and displays a point currently reached by the company in a milestone item in which a plurality of steps is displayed visually.

5. The funding management and post-management system of claim 4, wherein the stock issue management unit is configured to display a list of companies whose funding is in progress in an independent block of a main window of the homepage and to activate an investment button through which visited investors are able to directly participate in the funding while displaying information about the funding of a corresponding company in the sub-homepage of the company.

6. The funding management and post-management system of claim 5, wherein the potential investor-individual notification unit is configured to comprise:
a potential investor extraction unit which extracts a potential investor who has registered a company whose funding is in progress as an interest company through the stock issue management unit by searching the investor database for the potential investor; and
a notification means activation unit which recognizes notification means set by the potential investor as individual notification means, generates an individual notification message configured to be displayed in the notification means, and individually announces the individual notification message to the potential investor.

7. The funding management and post-management system of claim 6, wherein the funding management unit is configured to comprise:
an investment intention reception unit which accesses a sub-homepage of a company whose funding is in progress using the investor terminal, receives an investor's investment intention displayed when the investor inputs an investment amount, and accumulates and stores the investment intention in the funding database;
an investment intention publication unit which displays the investor's investment intention, received from the investment intention reception unit, on the investor terminal by disclosing the investor's investment intention to other investors who have accessed the sub-homepage of the company; and
an investment termination unit which terminates the funding by deactivating the investment button if an investment amount accumulated in the investment intention reception unit exceeds a target funding amount or after a new stock subscription period elapses.

8. The funding management and post-management system of claim 7, wherein the investment intention publication unit displays a list of investors who have expressed their investment intentions through the investment intention reception unit on their investor terminals so that investors who subsequently access the sub-homepage of the company are able to view the list of investors.

9. The funding management and post-management system of any one of claims 3 to 8, wherein the open platform server system is configured to comprise a timeline management unit which receives an activity history of a company to be invested from the company terminal of the company according to a chronological sequence, stores the received activity history in the company database, and displays the stored activity history through a sub-homepage so that investors who have participated in investment through the funding management unit are able to monitor the activity history of the company after the investment.

10. The funding management and post-management system of claim 9, wherein the open platform server system is configured to further comprise a company information update unit which updates and stores a change of company information, registered through the business opening unit and displayed through a sub-homepage assigned to a company, in the company database if there is the change and registers, updates, and displays the change in the sub-homepage.

11. A funding management and post-management method using an open platform, comprising:
an investor registration step of storing human information of investors who access an open platform server system over a communication network using investor terminals in an investor database;
a company information publication step of storing, by companies which want to receive investment, their company information and current achievement statuses of milestones in a company database and displaying the company information and the current achievement statuses of the milestones on an investor terminal which accesses the open platform server system;
a stock issue intention publication step of registering, by a company stored in the company database, funding information comprising a funding amount to be raised by issuing stocks and a new stock subscription period and notifying investors of a start of funding through a homepage;
a potential investor-individual notification of extracting potential investors who have registered the company that started the funding as an interest company from the investor database and individually notifying each potential investor of a funding progress situation of the interest company;
a leading investor investment intention reception unit of recognizing the progress of the funding through the homepage or the individual notification, receiving an investment intention inputted by an investor terminal which accesses a sub-homepage of the corresponding company, and accumulating and storing the investment intention in a funding database;
an investment intention opening step of displaying investment situations of leading investors accumulated and stored in the funding database on the investor terminals by disclosing the investment situations of the leading investors to other investors who access the sub-homepage of the corresponding company;
a following investor investment intention reception step of receiving investment intentions of other investors inputted after the disclosed investment situations of the leading investors are checked and accumulating and storing the received investment intentions in the funding database; and
a funding termination step of terminating the funding if the target funding amount is exceeded or the new stock subscription period elapses.

12. The funding management and post-management method of claim 11, wherein the investor registration step comprises:
accessing the open platform server system over a communication network,
checking company information and a current achievement status of a milestone, and
storing and registering individual notification means for individually receiving human information of investors, an interest company selected by the investors, and a funding progress situation and past investment history of the interest company in the investor database.

13. The funding management and post-management method of claim 12, wherein the company information publication step comprises:
setting, by each company, a milestone that is a target to be achieved while managing business,
storing the milestone in the company database, and
displaying an achieved milestone through the main homepage managed by the open platform server system and a sub-homepage of a corresponding company if the corresponding company achieves the milestone so that investors' interest in the corresponding company is attracted.

14. The funding management and post-management method of claim 13, wherein the potential investor-individual notification step comprises:
a potential investor extraction process of extracting potential investors who have registered companies for which a start of funding has been determined as interest companies in the stock issue intention publication step from the investor database, and
a potential investor notification process of individually notifying the extracted potential investors of funding progress situations of the interest companies through means, such as news feed, a message, or SNS.

15. The funding management and post-management method of any one of claims 11 to 14, further comprising an investment post-management step of displaying an activity history of the company to be invested to the investors who have participated in the investment through the funding through the sub-homepage in a form of a timeline, updating and storing the company information, and displaying the updated and stored company information so that the investors are able to monitor the company to be invested.

16. The funding management and post-management method of claim 15, wherein the timeline update process comprises:
storing the activity history of the company for which the funding has been completed generated while the company manages business in the company database, and
updating and displaying the stored activity history in the sub-homepage of the company according to a chronological sequence in the form of the timeline.

17. The funding management and post-management method of claim 16, wherein the investment post-management step comprises a company information update process of modifying the company information disclosed by the company to be invested in the company information publication step if there is a change in the company information, updating and storing the modified company information in the company database, and updating and displaying the updated and stored new company information in a sub-homepage of the corresponding company.
